(19) Europäisches Patentamt
European Patent Office
Office européen des brevets

(11) **EP 3 525 406 A1**

(12) **EUROPEAN PATENT APPLICATION**
published in accordance with Art. 153(4) EPC

(43) Date of publication:
**14.08.2019 Bulletin 2019/33**

(21) Application number: **17865389.5**

(22) Date of filing: **18.10.2017**

(51) Int Cl.:
**H04L 12/807** (2013.01)

(86) International application number:
**PCT/CN2017/106730**

(87) International publication number:
**WO 2018/077100 (03.05.2018 Gazette 2018/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.10.2016 CN 201610971199**

(71) Applicant: **Huawei Technologies Co., Ltd.**
**Longgang District**
**Shenzhen, Guangdong 518129 (CN)**

(72) Inventors:
• **LI, Jin**
  **Shenzhen**
  **Guangdong 518129 (CN)**
• **LI, Feng**
  **Shenzhen**
  **Guangdong 518129 (CN)**
• **ZHOU, Xingwang**
  **Shenzhen**
  **Guangdong 518129 (CN)**

(74) Representative: **Körber, Martin Hans**
**Mitscherlich PartmbB**
**Patent- und Rechtsanwälte**
**Sonnenstrasse 33**
**80331 München (DE)**

(54) **METHOD AND APPARATUS FOR DETERMINING TCP CONGESTION WINDOW**

(57) The present invention discloses a method for determining a TCP congestion window, and an apparatus. The communications method includes: receiving, by a network node, a data packet; obtaining a load level of a first output port used for sending the data packet by the network node; updating a load level in the data packet; and generating a network node data packet and sending the network node data packet to a TCP receive end. The TCP receive end adds a load level to a to-be-returned ACK packet. A TCP transmit end determines a new congestion window based on the load level of the ACK packet and a current congestion window. In embodiments of the present invention, fast and accurate adjustment of a congestion window by the TCP transmit end is implemented by using a load level of a path through which the data packet passes, so that network resources converge to high utilization, and network throughput and fairness of traffic flows are improved.

FIG. 2

**Description**

**TECHNICAL FIELD**

The present invention relates to the field of network transmission technologies, and in particular, to a method for determining a TCP congestion window, and an apparatus.

**BACKGROUND**

The Transmission Control Protocol (Transmission Control Protocol, TCP for short) is currently one of main transmission protocols for Internet application, and provides a connection-oriented reliable packet transmission service. The Transmission Control Protocol can be used for reliable data transmission between nodes on a packet-based network. Basic protocols used on the current Internet, such as the File Transfer Protocol (File Transfer Protocol, FTP for short), the Hypertext Transfer Protocol (Hypertext Transfer Protocol, HTTP for short), and the Secure Sockets Layer (Secure Sockets Layer, SSL for short), are all carried by using the TCP.

On a packet switched network, when a quantity of data packets to be transmitted is too large, a network transmission performance decrease, namely congestion, is caused due to limited link bandwidth resources. When there is congestion on a network, phenomena such as data packet loss, an increase in delay, and a decrease in network throughput occur. In a severe case, a "congestion collapse" phenomenon may be caused. Congestion control is an important control function of the TCP to ensure reliable transmission of a data packet on the packet-based network. A congestion window is a main key parameter in the congestion control, and describes a maximum quantity of data packets that can be sent by a TCP transmit end for a particular data stream in a round trip time (Round-Trip Time, RTT for short). The TCP transmit end can adjust a packet send window based on a received acknowledgment (ACKnowledge, ACK for short) packet by adjusting a size of the congestion window. Therefore, a data sending rate can be adjusted, to avoid a network collapse phenomenon. Therefore, whether the congestion window is properly set directly affects a congestion control effect on the network.

Currently, a common TCP congestion control method includes an algorithm based on packet loss detection. Packet loss is generally considered as an indication of network congestion. When the TCP transmit end detects three repeated ACK packets, it is considered that packet loss is detected, and then a congestion control policy is enabled to halve a size of the congestion window. A rate is proactively reduced based on a new congestion window to send a data packet of each connection, so as to restore the network from congestion. A main process of the common TCP congestion control method includes a TCP slow start, congestion avoidance, fast retransmit, fast recovery, and the like. Because in existing congestion control based on packet loss feedback, a TCP transmit end controls sending in a next RTT cycle based on ACK feedback acknowledgment information of a TCP receive end, the existing congestion control has a relatively large lag. The TCP receive end triggers rate adjustment only after congestion already occurs on the network and packet loss is obvious. In this case, user experience is already affected. In order to improve such a "belated" congestion control mechanism, an explicit congestion notification (Explicit Congestion Notification, ECN for short) technology is introduced in the prior art. This technology requires a "warning" function. To be specific, when the network is close to congestion but no obvious packet loss is caused, the TCP transmit end is instructed to reduce the rate in advance. A main principle of an ECN method is as follows: When a network node having an ECN capability detects upcoming congestion, the network node sets a "congestion experienced" (Congestion Experienced, CE for short) code point in an IP header of a received data packet and forwards the data packet to the TCP receive end. The TCP receive end observes the CE code point, and sets an "ECN echo" (ECN Echo, ECE for short) flag in a TCP header of a next ACK packet to be sent by the TCP receive end to the TCP transmit end. After receiving the ACK packet that has the ECE, the TCP transmit end responds in a same manner as a manner for a case in which a similar packet has been discarded. It can be learned that the ECN is used to allow the network node to send, when the congestion is about to occur, a signal to notify the TCP receive end. When the TCP receive end receives the data packet that has the ECE flag, the TCP receive end learns that the network node is about to be congested, and therefore instructs the TCP transmit end to reduce a transmission rate in advance to avoid the network congestion.

However, the method in the prior art has the following problems: First, a main objective of the ECN is to enable the TCP transmit end to reduce a size of the congestion window in advance when the network node is about to be congested, to implement congestion control. However, there is a lack of a processing mechanism when a network is lightly loaded. When the network is lightly loaded, the ECN method cannot fast notify the TCP transmit end of an idleness status of network resources to enable the TCP transmit end to fast increase a size of the congestion window and improve a transmission speed, so as to better utilize network transmission resources. In addition, the ECN mechanism cannot accurately reflect a network congestion status. When a plurality of network nodes on a data packet transmission path are congested, the ECN method performs only CE code point marking, but cannot learn a most congested node of the network nodes or distinguish congestion levels of the nodes, and the TCP transmit end cannot accurately obtain a congestion level and a bottleneck node of the network. Consequently, it is difficult for the TCP transmit end to fast and accurately reduce a size of the congestion window and perform efficient congestion control and avoidance.

**SUMMARY**

An objective of the present invention is to overcome disadvantages in the prior art, and propose a new method for determining a TCP congestion window, and an apparatus, to implement fast and accurate adjustment of a TCP congestion window based on a network load status of a path through which a data packet passes.

According to a first aspect, an embodiment of the present invention provides a method for determining a TCP congestion window. The method includes: receiving, by a network node, a data packet, where a header of the data packet carries a load level of a path through which the data packet passes; obtaining, by the network node, a load level of a corresponding first output port used to send the data packet; updating, by the network node, the load level in the data packet based on the load level of the first output port; and sending, by the network node, the updated data packet.

With reference to the first aspect, in a first possible implementation of the first aspect, the updating, by the network node, the load level in the data packet includes: adding, by the network node to the header of the data packet, the load level of the corresponding first output port used to send the data packet.

With reference to the first aspect, in a second possible implementation of the first aspect, the updating, by the network node, the load level in the data packet includes: determining, by the network node, that the load level of the corresponding first output port used to send the data packet is higher than a load level in the header of the data packet; and replacing, by the network node, the load level in the header of the data packet with the load level of the corresponding first output port used to send the data packet.

With reference to the first aspect to the second possible implementation of the first aspect, in a third possible implementation of the first aspect, the load level may be represented by an idleness rate or a congestion level.

With reference to the first aspect, in a fourth possible implementation of the first aspect, the data packet is an IP data packet.

According to a second aspect, an embodiment of the present invention provides a method for determining a TCP congestion window. The method includes: sending, by a TCP transmit end, a source data packet, and waiting to receive an ACK packet; receiving, by the TCP transmit end, the ACK packet; and determining, by the TCP transmit end, a TCP congestion window based on a load level carried in a header of the ACK packet.

With reference to the second aspect, in a first possible implementation of the second aspect, the method for determining a TCP congestion window further includes: when the load level is less than or equal to 1, New TCP congestion window = Current congestion window * (1 + (1 - Load level)/Load level); or when the load level is greater than 1, New TCP congestion window = Current congestion window/Load level.

According to a third aspect, an embodiment of the present invention provides a method for determining a TCP congestion window. The method includes: receiving, by a TCP receive end, a data packet; generating, by the TCP receive end, an ACK packet of the data packet, where a header of the ACK packet carries a load level in a header of the data packet; and sending, by the TCP receive end, the ACK packet.

According to a fourth aspect, an embodiment of the present invention provides a network node. The network node includes a communications interface and a processor. The processor is configured to: receive a data packet by using the communications interface, and obtain a load level of a corresponding first output port used to send the data packet, where a header of the data packet carries a load level of a path through which the data packet passes; update the load level in the data packet based on the load level of the first output port; and send the updated data packet by using the communications interface.

With reference to the fourth aspect, in a first possible implementation of the fourth aspect, that a processor updates the load level in the data packet includes: the processor adds, to the header of the data packet, the load level of the corresponding first output port used to send the data packet.

With reference to the fourth aspect, in a second possible implementation of the fourth aspect, that a processor updates the load level in the data packet includes: the processor determines that the load level of the corresponding first output port used to send the data packet is higher than a load level in the header of the data packet; and the processor replaces the load level in the header of the data packet with the load level of the corresponding first output port used to send the data packet.

With reference to the fourth aspect to the second possible implementation of the fourth aspect, in a third possible implementation of the fourth aspect, the load level may be represented by an idleness rate or a congestion level of the first output port.

With reference to the fourth aspect, in a fourth possible implementation of the fourth aspect, the data packet is an IP data packet.

According to a fifth aspect, an embodiment of the present invention provides a TCP transmit end. The TCP transmit end includes a communications interface and a processor. The processor is configured to: send a source data packet and receive an ACK packet by using the communications interface; and determine a TCP congestion window based on a load level carried in a header of the ACK packet.

With reference to the fifth aspect, in a first possible implementation of the fifth aspect, that a processor determines a TCP congestion window further includes: when the load level is less than or equal to 1, New TCP congestion window = Current congestion window * (1 + (1 - Load level)/Load level); or when the load level is greater than 1, New TCP congestion window = Current congestion window/Load level.

According to a sixth aspect, an embodiment of the present invention provides a TCP receive end. The TCP receive end includes a communications interface and a processor. The processor is configured to: receive a data packet by using the communications interface; generate an ACK packet of the data packet, where a header of the ACK packet carries a load level in a header of the data packet; and send the ACK packet by using the communications interface.

In the embodiments of the present invention, in a process of determining a TCP congestion window, because a load level of each network node on a path through which a data packet passes is considered, a size of a congestion window can be determined more properly and accurately. In a low-load or high-load phase of a network, the method in the present invention can fast and accurately increase or decrease the size of the congestion window to an ideal size, so that network transmission resources fast converge to high utilization and network throughput is improved. In addition, according to a method for adjusting a TCP send window in the embodiments, traffic flows of the TCP transmit end can obtain a same load level. In the low-load or high-load phase of the network, proportions of increases or decreases in a size of the congestion window are also the same, thereby improving fairness of traffic flows.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a network architecture according to an embodiment of the present invention;

FIG. 2 is a schematic flowchart of a method for determining a TCP congestion window according to an embodiment of the present invention;

FIG. 3 is a schematic flowchart of another method for determining a TCP congestion window according to an embodiment of the present invention;

FIG. 4 is a schematic flowchart of a method for determining a TCP congestion window by a network node according to an embodiment of the present invention;

FIG. 5 is a schematic flowchart of another method for determining a TCP congestion window by a network node according to an embodiment of the present invention;

FIG. 6 is a schematic flowchart of still another method for determining a TCP congestion window by a network node according to an embodiment of the present invention;

FIG. 7 is a schematic flowchart of a method for determining a TCP congestion window by a TCP transmit end according to an embodiment of the present invention;

FIG. 8 is a schematic flowchart of a method for determining a TCP congestion window by a TCP receive end according to an embodiment of the present invention;

FIG. 9 is a schematic structural diagram of a TCP transmit end according to an embodiment of the present invention;

FIG. 10 is a schematic structural diagram of another TCP transmit end according to an embodiment of the present invention;

FIG. 11 is a schematic structural diagram of a network node according to an embodiment of the present invention;

FIG. 12 is a schematic structural diagram of another network node according to an embodiment of the present invention;

FIG. 13 is a schematic structural diagram of a TCP receive end according to an embodiment of the present invention; and

FIG. 14 is a schematic structural diagram of another TCP receive end according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. The following several specific embodiments may be combined with each other, and a same or similar concept or process may not be described in some embodiments again. All other embodiments obtained by a person of ordinary skill in the art based on the embodiments of the present invention without creative efforts shall fall within the protection scope of the present invention.

In this application, the word "exemplary" is used to represent giving an example, an illustration, or a description. Any embodiment described as "exemplary" in this application may not be explained as being more preferred or having more advantages than another embodiment. The following description is intended to make any person skilled in the art implement and use the present invention. In the following description, details are listed for purposes of explanation. It should be understood that a person of ordinary skill in the art may learn that the present invention may also be implemented without these specific details. In another instance, a well-known structure and process are not described in detail, to avoid unnecessary details that may make descriptions in the present invention obscure. Therefore, the present invention is not intended to be limited to the shown embodiments, but is consistent with a widest scope that complies with principles and features disclosed in this application.

In the specification, claims, and accompanying drawings of the present invention, the terms "first", "second", "third", "fourth", and so on (if existent) are intended to distinguish between similar objects but do not necessarily indicate a specific order or sequence. It should be understood that the data termed in such a way is interchangeable in proper circumstances so that the embodiments of the present invention described herein can be implemented in other orders than the order illustrated or described herein. In addition, the terms "include", "have", and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

The terms "system" and "network" may be used interchangeably in the specification. The term "and/or" in the specification describes only an association relationship for describing associated objects and represents that three relationships may exist. For example, A and/or B may represent the following three cases: Only A exists, both A and B exist, and only B exists. In addition, the character "/" in the specification generally indicates an "or" relationship between the associated objects.

Specific embodiments are used below to describe in detail the technical solutions of the present invention. The following several specific embodiments may be combined with each other, and a same or similar concept or process may not be described in some embodiments again.

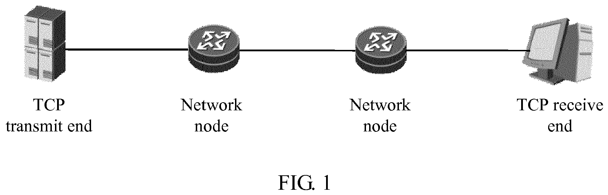

A method for determining a TCP congestion window, and an apparatus that are provided in the embodiments of the present invention are applicable to network data transmission, and in particular, to a scenario in which a data packet is transmitted between a TCP transmit end and a TCP receive end by using one or more network nodes. FIG. 1 shows a network architecture applied according to an embodiment of the present invention. A network includes network elements such as a TCP transmit end, a network node, and a TCP receive end. The TCP transmit end sends a data packet to the TCP receive end by using M network nodes, and M is an integer greater than or equal to 1. In FIG. 1, M is 2. First, a plurality of method execution bodies in the methods for determining a TCP congestion window provided in this embodiment of the present invention are described. As shown in FIG. 1, the TCP transmit end includes but is not limited to a web server (English: Web Server), a video server (English: Video Server), an instant messaging server (English: IM Server), a game server (English: Game Server), and the like, and has functions such as providing the TCP receive end with a web page, a video file, IM communication, and a game. The TCP receive end includes but is not limited to a plurality of applications such as a browser, a video player, IM chat software, and an online game, obtains data sent by the TCP transmit end, and provides a user with functions such as web browsing, video play, communication, and entertainment. The network node is a data packet forwarding device located between the TCP transmit end and the TCP receive end. The network node has an IP address and supports the transmission layer protocol Transmission Control Protocol/Internet Protocol (Transmission Control Protocol/Internet Protocol, TCP/IP), and may be a network node such as a digital subscriber line access multiplexer (Digital Subscriber Line Access Multiplexer, DSLAM), a switch, a router, or an optical line terminal (optical line terminal, OLT). Implementation of the embodiments of the present invention is deployed on network elements such as the TCP transmit end, the network node, and the TCP receive end.

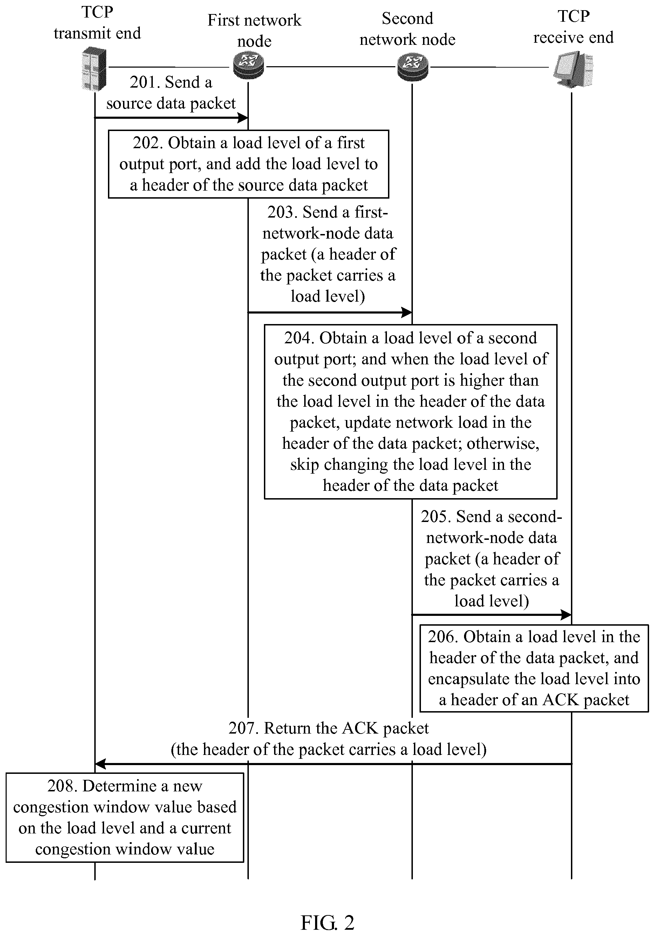

FIG. 2 is a schematic flowchart of an embodiment of a method for determining a TCP congestion window according to the present invention. As shown in FIG. 2, a TCP transmit end is connected to a TCP receive end by using a first network node and a second network node. In this embodiment, a network node directly connected to the TCP transmit end is referred to as the first network node. A connection between the first network node, the second network node, and the TCP receive end may be a direct connection or an indirect connection. For example, a network node such as another relay device, a switching device, or a convergence device may be connected between the first network node and the second network node or between the second network node and the TCP receive end. Alternatively, the first network node may be directly connected to the TCP receive end. The method in this embodiment of the present invention may be applied to a data packet sending process after a TCP connection is established between the TCP transmit end and the TCP receive end. As shown in FIG. 2, the method includes the following steps.

201. The TCP transmit end sends a source data packet to the first network node.

The source data packet is a data packet sent by the TCP transmit end to the TCP receive end.

202. The first network node obtains a load level of a corresponding first output port used by the first network node to send the source data packet, and adds the load level to a header of the source data packet.

In this embodiment of the present invention, the first network node may obtain, by querying a data sending table, the corresponding first output port used to send the source data packet. For a method for obtaining the corresponding first output port used to send the data packet, refer to the prior art. Specific implementation details are not described herein.

The load level reflects a relationship between a data sending status of the first output port, used for sending the data packet, of the network node and a sending capability of the output port. A value of the load level is a real number greater than or equal to 0. When the load level is less than 1, it indicates that the first output port has more transmission resources than those required for sending the data packet. When the load level is equal to 1, it indicates that transmission resources of the first output port are equivalent to transmission resources required for sending the data packet. When the load level is greater than 1, it indicates that transmission resources of the first output port are fewer than transmission resources required for sending the data packet, that is, the first output port enters a congested state. In some implementations, the load level may be represented by an idleness rate of the first output port. The idleness rate may be represented by a remaining or unused sending capability of the first output port. For example, bandwidth of the first output port is 1 Gbps, and an actual data sending volume is only 600 Mbps. In this case, the idleness rate of the first output port is 40% (which is (1 Gbps - 600 Mbps)/1 Gbps = 40%). It can be learned that a lower load level of the first output port indicates a higher corresponding idleness rate; and conversely, a higher load level of the first output port indicates a lower corresponding idleness rate. In some other implementations, the load level may be represented by a congestion level of the first output port. The congestion level may be represented by additional transmission resources required when the first output port does not meet a data packet sending requirement. For example, a rate requirement of a data packet sent by using the first output port is 1.2 Gbps, and bandwidth corresponding to the first output port is 1 Gbps. In this case, the congestion level of the first output port is 20% (which is 1.2 Gbps/1 Gbps - 1 = 20%). In other words, data packet sending traffic exceeds available bandwidth by 20%. It can be learned that a higher load level of the first output port indicates a higher corresponding congestion level; and conversely, a lower load level of the first output port indicates a lower corresponding congestion level. Optionally, a manner of obtaining the load level of the first output port by the first network node is as follows: After a maximum RTT (which is generally about 200 ms) of one or more TCP traffic flows sent by using the first output port, the first network node detects that traffic of each TCP traffic flow stabilizes, and detects a data sending status and transmission resources of the first output port after a plurality of subsequent sampling cycles (which are generally at an ms level), to obtain the load level of the first output port. In addition, the load level may alternatively be represented by using a busy level, a queue length, or a remaining resource quantity of the first port.

In this embodiment of the present invention, the first network node updates the received source data packet based on the load level of the first output port. Specifically, the first network node adds the load level of the first output port to the header of the received source data packet, payload of the source data packet remains unchanged, and a first-network-node data packet is generated. For example, if the TCP transmit end sends an IP data packet, a load level carried in an IP header of the data packet may be implemented by extending an IP option. Specifically, content that needs to be encapsulated may be encapsulated into a type-length-value TLV (Type-Length-Value) field of the IP packet, as shown in Table 1.

**Table 1**

| Type | Length | Value |
|------|--------|-------|
| Load level | A value field is of a float type and occupies four bytes. | 0.8 |

It should be noted that Table 1 exemplarily shows that the load level of the first output port of the first network node is 0.8. In an actual network, a size of the value is calculated based on the first output port of the first network node based on the foregoing definition of the load level. For example, bandwidth of the first output port is 1 Gbps, and a load level is 0.8, indicating that an idleness rate of the first output port is 20%.

203. The first network node sends a first-network-node data packet to the second network node. A header of the data packet carries a load level.

The load level is a load level that is of the first output port of the first network node and that is added by the first network node to the header of the received source data packet.

204. The second network node receives the first-network-node data packet sent by the first network node, and obtains a load level of a corresponding second output port used by the second network node to send the data packet; and if the load level is higher than the load level in the header of the first-network-node data packet, updates the load level in the header of the first-network-node data packet, and generates a second-network-node data packet, where payload of the first-network-node data packet is the same as payload of the second-network-node data packet, otherwise, skips changing the load level in the header of the first-network-node data packet, and uses the first-network-node data packet as the second-network-node data packet.

In this embodiment of the present invention, the second network node may obtain, by querying a data sending table, the corresponding second output port used to send the data packet. For a method for obtaining the corresponding second output port used to send the data packet, refer to the prior art. Specific implementation details are not described herein.

Specifically, the second network node obtains the load level that is at the second output port and that is of the second network node, and compares the load level with the load level in the header of the received first-network-node data packet. If the load level is higher than the load level in the header of the first-network-node data packet, it indicates that a transmission capability that can be provided by the second network node for the data packet is lower than a transmission capability that can be provided by the first network node for the data packet. In this case, the second network node is a bottleneck node in transmitting the TCP source data packet on the network. In this case, the second network node replaces the load level in the header of the received first-network-node data packet with the load level of the second output port of the second network node, and keeps the payload of the first-network-node data packet unchanged and uses the updated first-network-node data packet as the data packet sent by the second network node. Alternatively, if the load level is equal to or lower than the load level in the header of the received first-network-node data packet, it indicates that a transmission capability that can be provided by the second network node for the data packet is not lower than a transmission capability that can be provided by the first network node for the data packet. In this case, the second network node is not a bottleneck node in transmitting the TCP data packet on the network. In this case, the second network node may not process the load level in the header of the received first-network-node data packet, and directly use the received first-network-node data packet as the second-network-node data packet.

205. The second network node sends the second-network-node data packet to the TCP receive end. A header of the data packet carries a load level obtained after processing by the second network node.

In this embodiment of the present invention, according to the operations in the foregoing step 204, if the load level of the second output port of the second network node is higher than the load level in the header of the first-network-node data packet, a load level carried in the header of the second-network-node data packet is the load level of the second output port of the second network node. Alternatively, if the load level of the second output port of the second network node is equal to or less than the load level in the header of the first-network-node data packet, a load level carried in the header of the second-network-node data packet is the load level of the first output port of the first network node.

206. The TCP receive end parses the received second-network-node data packet to obtain a load level from the header of the data packet, and encapsulates the load level into a header of an ACK packet.

The load level carried in the header of the ACK packet is the load level carried in the header of the second-network-node data packet that is received by the TCP receive end.

In this embodiment of the present invention, the TCP receive end parses the received data packet to obtain the load level from the header of the received data packet, and encapsulates the load level into the header of the ACK packet. For example, the ACK packet may be carried by using the TCP protocol, and a load level carried in a TCP header of the ACK packet may be implemented by extending a TCP option. Specifically, content that needs to be encapsulated may be encapsulated into a type-length-value TLV (Type-Length-Value) field of a TCP packet, and specific implementation is consistent with that of the IP option shown in Table 1. For a method for obtaining, by the TCP receive end, the load level from the header of the data packet and re-encapsulating the load level into the TCP header of the ACK packet, refer to the prior art. Specific implementation details are not described herein.

207. The TCP receive end returns the acknowledgment (Acknowledgement, ACK) packet to the TCP transmit end, where the header of the ACK packet carries the load level.

The load level is a load level obtained by the TCP receive end after the operation in the foregoing step 206.

208. After receiving the ACK packet returned by the TCP receive end, the TCP transmit end determines a new TCP congestion window based on the load level carried in the header of the ACK packet and a current congestion window of the TCP transmit end.

A specific method for determining a new TCP congestion window by the TCP transmit end based on the load level is described in detail in the following embodiments.

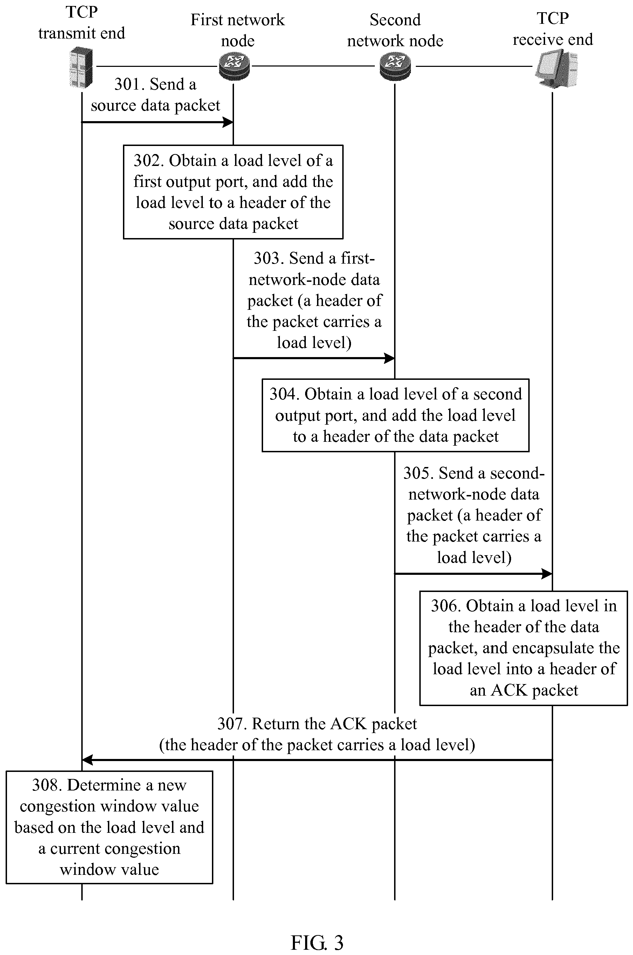

FIG. 3 is a schematic flowchart of another embodiment of a method for determining a TCP congestion window according to the present invention. The method includes the following steps.

301. A TCP transmit end sends a source data packet to a first network node.

302. The first network node obtains a load level of a corresponding first output port used by the first network node to send the data packet. The first network node updates the received source data packet based on the load level of the first output port. Specifically, the first network node adds the load level of the first output port to a header of the received source data packet, payload of the source data packet remains unchanged, and a first-network-node data packet is generated.

303. The first network node sends a first-network-node data packet to a second network node. A header of the data packet carries the load level.

Implementations of the foregoing steps 301, 302, and 303 are similar to those of steps 201, 202, and 203 in the foregoing embodiment. Details are not described herein again.

304. The second network node receives the data packet sent by the first network node, obtains a load level of a corresponding second output port used by the second network node to send the data packet, adds the load level to the header of the received data packet to update the load level in the header of the data packet, and generates a second-network-node data packet, where payload of the first-network-node data packet is the same as payload of the second-network-node data packet.

In this embodiment of the present invention, the second network node does not modify the load level in the header of the received first-network-node data packet, and the second network node adds, to the header of the first-network-node data packet, the load level of the corresponding second output port used to send the data packet. For example, if the TCP transmit end sends an IP data packet, the second network node may suffix, in a form of a TLV field, a TLV field of a load level of an IP header of the received first-network-node data packet with the load level of the second output port, to form a new load level. Different from step 204 in the foregoing embodiment, after step 304, a load level carried in an IP header of the second-network-node data packet includes the load level of the first output port of the first network node and the load level of the second output port of the second network node.

305. The second network node sends the second-network-node data packet to a TCP receive end. The header of the data packet carries a load level obtained after processing by the second network node.

The load level carried in the header of the data packet includes the load level of the first output port of the first network node and the load level of the second output port of the second network node.

306. The TCP receive end parses the received second-network-node data packet to obtain a load level from the header of the data packet, and encapsulates the load level into a header of an ACK packet.

In some implementations, the load level carried in the header of the ACK packet is a load level carried in a header of a data packet that is unprocessed and that is received by the TCP receive end. For example, the load level carried in the header of the data packet that is received by the TCP receive end includes load levels of the first network node and the second network node. The TCP receive end may not process the load level of the first output port of the first network node and the load level of the second output port of the second network node, and directly encapsulate them into the header of the ACK packet. In some other implementations, the load level carried in the header of the ACK packet is a load level carried in a header of a data packet that is processed and that is received by the TCP receive end. For example, the load level carried in the header of the data packet that is received by the TCP receive end includes the load level of the first output port of the first network node and the load level of the second output port of the second network node. The TCP receive end performs mathematical operation processing, for example, averaging processing, on the load levels of the first network node and the second network node, and encapsulates an average load level into the header of the ACK packet.

307. The TCP receive end returns the acknowledgment (Acknowledgement, ACK) packet to the TCP transmit end, where the header of the ACK packet carries the load level.

In some implementations, the load level carried in the header of the ACK packet includes the load level of the first output port of the first network node and the load level of the second output port of the second network node. In some other implementations, the load level carried in the header of the ACK packet includes a load level obtained by performing mathematical operation processing on the load level of the first output port of the first network node and the load level of the second output port of the second network node.

308. After receiving the ACK packet returned by the TCP receive end, the TCP transmit end determines a new TCP congestion window based on the load level carried in the header of the ACK packet and a current congestion window of the TCP transmit end.

A specific method for determining a new TCP congestion window by the TCP transmit end based on the load level is described in detail in the following embodiments.

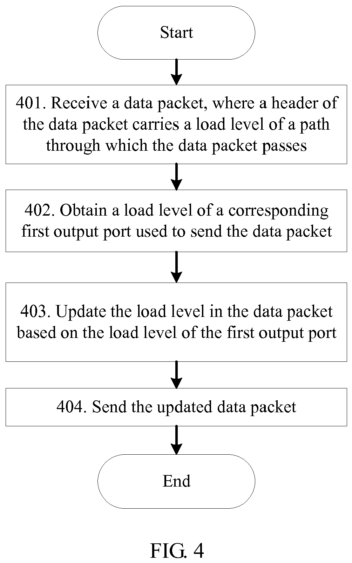

The following first describes the method for determining a TCP congestion window provided in the embodiments of the present invention from a perspective of a network node. FIG. 4 is a schematic flowchart of an embodiment of a method for determining a congestion window on a network according to the present invention. This embodiment is performed by a network node, and the method in this embodiment is as follows.

401. Receive a data packet, where a header of the data packet carries a load level of a path through which the data packet passes.

The header of the data packet carries the load level. In some implementations, the network node receives a source data packet sent by a TCP transmit end. In this case, the network node corresponds to the first network node shown in FIG. 2. In this case, a load level carried in the header of the data packet received by the network node is 0 by default. In some other implementations, the network node receives a data packet sent by another network node. In this case, the network node corresponds to the second network node shown in FIG. 2. In this case, the header of the data packet received by the network node carries a load level obtained after processing by the another network node.

402. Obtain a load level of a corresponding first output port used to send the data packet.

The load level reflects a relationship between a data sending status of the first output port, used for sending the data packet, of the network node and a sending capability of the output port. A value of the load level is a real number greater than or equal to 0. When the load level is less than 1, it indicates that the first output port has more transmission resources than those required for sending the data packet. When the load level is equal to 1, it indicates that transmission resources of the first output port are equivalent to transmission resources required for sending the data packet. When the load level is greater than 1, it indicates that transmission resources of the first output port are fewer than transmission resources required for sending the data packet, that is, the first output port enters a congested state. In some implementations, the load level may be represented by an idleness rate of the first output port. The idleness rate may be represented by a remaining or unused sending capability of the first output port. For example, bandwidth of the first output port is 1 Gbps, and an actual data sending volume is only 600 Mbps. In this case, the idleness rate of the first output port is 40% (which is (1 Gbps - 600 Mbps)/1 Gbps = 40%). It can be learned that a lower load level of the first output port indicates a higher corresponding idleness rate; and conversely, a higher load level of the first output port indicates a lower corresponding idleness rate. In some other implementations, the load level may be represented by a congestion level of the first output port. The congestion level may be represented by additional transmission resources required when the first output port does not meet a data packet sending requirement. For example, a rate requirement of a data packet sent by using the first output port is 1.2 Gbps, and corresponding bandwidth is 1 Gbps. In this case, the congestion level of the first output port is 20% (which is 1.2 Gbps/1 Gbps - 1 = 20%). In other words, data packet sending traffic exceeds available bandwidth by 20%. It can be learned that a higher load level of the first output port indicates a higher corresponding congestion level; and conversely, a lower load level of the first output port indicates a lower corresponding congestion level. In addition, the load level may alternatively be represented by using a busy level, a queue length, or a remaining resource quantity of the first port. Optionally, a manner of obtaining the load level of the first output port by the first network node is as follows: After a maximum RTT (which is generally about 200 ms) of one or more TCP traffic flows sent by using the first output port, the first network node detects that traffic of each TCP traffic flow stabilizes, and detects a data sending status and transmission resources of the first output port after a plurality of subsequent sampling cycles (which are generally at an ms level), to obtain the load level of the first output port.

403. Update the load level in the data packet based on the load level of the first output port.

In this embodiment of the present invention, the network node updates the load level in the header of the received data packet based on the load level of the first output port, keeps payload of the data packet unchanged, and uses the data packet as an updated data packet.

404. Send the updated data packet.

Optionally, in the foregoing step 403, the network node receives the data packet sent by the another network node, when determining that the load level of the first output port is higher than the load level in the header of the received data packet, replaces the load level in the header of the received data packet with the load level of the first output port, keeps payload of the data packet unchanged, and uses the data packet as an updated data packet.

Optionally, in the foregoing step 403, the network node does not modify the load level in the header of the received data packet, adds the load level of the first output port to the header of the received data packet, keeps payload of the data packet unchanged, and uses the data packet as an updated data packet.

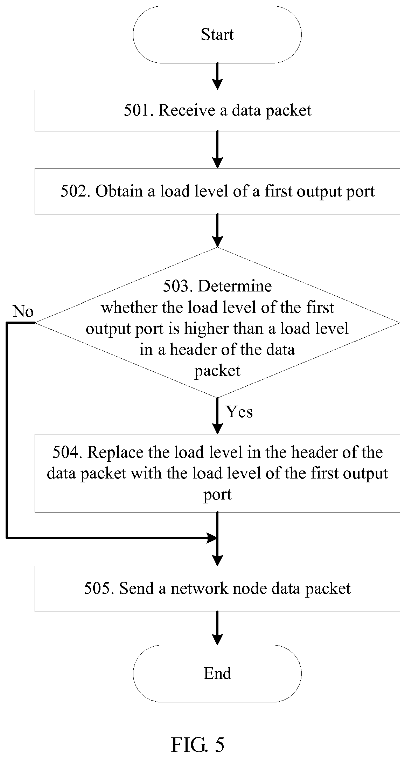

FIG. 5 is a schematic flowchart of a network node with reference to the foregoing first manner of updating a data packet. The method in this embodiment is as follows.

501. Receive a data packet.

502. Obtain a load level of a corresponding first output port used by the network node to send the data packet.

503. Determine whether the load level of the first output port is higher than a load level in a header of the received data packet. If the load level of the first output port is higher than the load level in the header of the received data packet, go to step 504; otherwise, go to step 505.

In some implementations, the network node receives a source data packet sent by a TCP transmit end, and a load level carried in the header of the received data packet is 0 by default. In some other implementations, the network node receives a data packet sent by another network node, and a load level of the received data packet is a load level carried in the header of the data packet. Further, the network node obtains the load level of the corresponding first output port used to send the data packet, and compares the load level with the load level in the header of the received data packet.

504. Replace the load level in the header of the data packet with the load level of the first output port, and keep payload of the data packet unchanged, to generate a network node data packet.

In this embodiment of the present invention, the network node is a bottleneck node in transmitting the TCP source data packet on a network. In this case, the network node replaces the load level in the header of the received data packet with the load level of the first output port, keeps payload of the data packet unchanged, and uses the data packet as a data packet to be sent by the network node.

505. Send the network node data packet.

A header of the network node data packet carries a load level. In some implementations, the load level may be the load level in the header of the data packet received by the network node. In some other implementations, the load level may be the load level of the first output port of the network node.

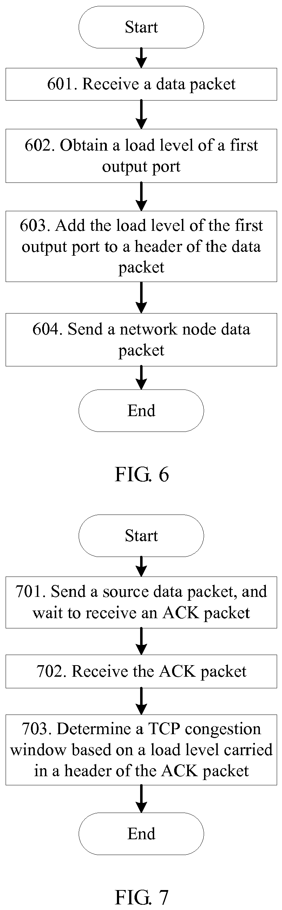

FIG. 6 is a schematic flowchart of a network node with reference to the foregoing second manner of updating a data packet. The method in this embodiment is as follows.

601. Receive a data packet.

602. Obtain a load level of a corresponding first output port used by the network node to send the data packet.

Implementations of the foregoing steps 601 and 602 are similar to those of steps 501 and 502 in the foregoing embodiment. Details are not described herein again.

603. Add the load level of the first output port to a header of the data packet, and keep payload of the data packet remains unchanged, to generate a network node data packet.

In this embodiment of the present invention, the network node does not modify the load level in the header of the received data packet. The network node adds the load level of the corresponding first output port used to send the data packet to the header of the received data packet, keeps payload of the data packet unchanged, and uses the data packet as a data packet to be sent by the network node. Different from step 503 in the foregoing embodiment, after step 603, a load level carried in a header of the network node data packet includes the load level carried in the header of the data packet received by the network node and the load level of the first output port of the network node.

604. Send the network node data packet.

The header of the network node data packet carries a load level. The load level may include the load level carried in the header of the data packet received by the network node and the load level of the first output port of the network node.

The following describes the method for determining a TCP congestion window provided in the embodiments of the present invention from a perspective of a TCP transmit end. FIG. 7 is a schematic flowchart of an embodiment of a method for determining a congestion window on a network according to the present invention. This embodiment is performed by a TCP transmit end. With reference to a network scenario shown in FIG. 1, the method in this embodiment is as follows.

701. Send a source data packet, and wait to receive an ACK packet.

The source data packet is a data packet sent by the TCP transmit end to a TCP receive end. In this embodiment of the present invention, after sending the source data packet, the TCP transmit end enters a state of waiting for receiving, to wait for the ACK packet returned by the TCP receive end.

702. Receive the ACK packet.

The ACK packet is returned by the TCP receive end to the TCP transmit end, and is used to acknowledge reception of the source data packet sent by the TCP transmit end.

703. Determine a TCP congestion window based on a load level carried in a header of the ACK packet.

In this embodiment of the present invention, the TCP transmit end determines a new TCP congestion window based on the load level carried in the header of the received ACK packet and a current congestion window.

Optionally, in the foregoing step 703, the load level carried in the header of the ACK packet received by the TCP transmit end includes one load level TLV. The new TCP congestion window may be determined by using a mathematical operation between a current congestion window and a load level. For example, when the load level is less than or equal to 1, New TCP congestion window = Current congestion window * (1 + (1 - Load level)/Load level); or when the load level is greater than 1, New TCP congestion window = Current congestion window/Load level. For example, a current TCP congestion window is equal to 100. If the load level is equal to 50%, that is, an idleness rate on a network is 50%, the new TCP congestion window is equal to 100 * (1 + (1 - 50%)/50%) = 200. In other words, the new TCP congestion window doubles compared with the current TCP congestion window. If the load level is equal to 120%, that is, a congestion ratio on a network is 20%, the new TCP congestion window is equal to 100/120% = 83. In other words, a size of the new TCP congestion window decreases by 20% compared with that of the current TCP congestion window. When the TCP transmit end simultaneously sends a plurality of traffic flows, such as a first traffic flow and a second traffic flow, each traffic flow has a respective TCP congestion window. Accordingly, a new TCP congestion window of each traffic flow may be determined by using a mathematical operation between a current congestion window of each traffic flow and a load level. For example, when the load level is less than or equal to 1, New TCP congestion window of each traffic flow = Current congestion window of each traffic flow * (1 + (1 - Load level)/Load level); or when the load level is greater than 1, New TCP congestion window of each traffic flow = Current congestion window of each traffic flow/Network congestion level. For example, a current TCP congestion window of the first traffic flow is equal to 50, and a current TCP congestion window of the second traffic flow is equal to 80. If the load level is equal to 50%, that is, an idleness rate on a network is 50%, the new TCP congestion window of the first traffic flow is equal to 50 * (1 - 50%)/50% = 100, and the new TCP congestion window of the second traffic flow is equal to 80 * (1 + (1 - 50%)/50%) = 160. If the load level is equal to 120%, that is, a congestion ratio on a network is 20%, the new TCP congestion window of the first traffic flow is equal to 50/120% = 41, and the new TCP congestion window of the second traffic flow is equal to 80/120% = 66.

Optionally, in the foregoing step 703, the load level carried in the header of the ACK packet received by the TCP transmit end includes a plurality of load level TLVs. The new TCP congestion window may be determined by using a mathematical operation between a current congestion window and a plurality of load levels in the load level. For example, when the load level is less than or equal to 1, New TCP congestion window = Current congestion window * (1 + (1 - Load level)/Load level); or when the load level is greater than 1, New TCP congestion window = Current congestion window/Network congestion level. $\text{Load level} = \frac{1}{N}\sum_{i=1}^{N}\text{Load level i}$, where N indicates that the load level includes N load levels. When the TCP transmit end sends a traffic flow, if a current TCP congestion window is equal to 100 and the load level includes two load level TLVs, where a load level 1=50% and a load level 2 is equal to 70%, the load level = (50% + 70%)/2 is equal to 60%, that is, an idleness rate on a network is 40%. In this case, the new TCP congestion window is equal to 100 * (1 + (1 - 60%)/60%) = 166. If a current TCP congestion window is equal to 100 and the load level includes two load level TLVs, where a load level 1 is equal to 120% and a load level 2 is equal to 110%, the load level is equal to (120% + 110%)/2 = 105%, that is, a congestion ratio on a network is 5%. In this case, the new TCP congestion window is equal to 100/105% = 95. When the TCP transmit end simultaneously sends a plurality of traffic flows, a new TCP congestion window of each traffic flow may be determined by using a mathematical operation between a current congestion window of each traffic flow and a load level. For example, a current TCP congestion window of the first traffic flow is equal to 50, and a current TCP congestion window of the second traffic flow is equal to 80. If the load level includes two load level TLVs, where a load level 1 is equal to 50% and a load level 2 is equal to 70%, the load level is equal to (50% + 70%)/2 = 60%, that is, an idleness rate on a network is 40%. In this case, the new TCP congestion window of the first traffic flow is equal to 50 * (1 + (1 - 60%)/60%) = 83, and the new TCP congestion window of the second traffic flow is equal to 80 * (1 + (1 - 60%)/60%) = 133. If the load level includes two load level TLVs, where a load level 1 is equal to 120% and a load level 2 is equal to 110%, the load level = (120% + 110%)/2 = 105%, that is, a congestion ratio on a network is 5%. In this case, the new TCP congestion window of the first traffic flow is 50/105% = 47, and the new TCP congestion window of the second traffic flow is equal to 80/105% = 76.

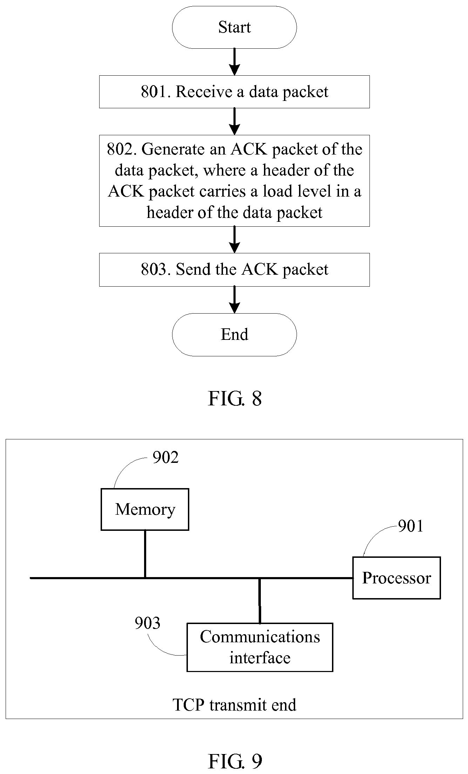

The following describes the method for determining a TCP congestion window provided in the embodiments of the present invention from a perspective of a TCP receive end. FIG. 8 is a schematic flowchart of an embodiment of a method for determining a congestion window on a network according to the present invention. This embodiment is performed by a TCP receive end. With reference to a network scenario shown in FIG. 1, the method in this embodiment is as follows.

801. Receive a data packet.

802. Generate an ACK packet of the data packet, where a header of the ACK packet carries a load level in a header of the data packet.

803. Send the ACK packet.

The header of the ACK packet carries the load level.

Optionally, in the foregoing step 802, the TCP receive end does not process the load level carried in the header of the received data packet, and directly encapsulates the load level into the header of the ACK packet. In this case, the load level carried in the header of the ACK packet may include one or more load level TLVs.

Optionally, in the foregoing step 802, the TCP receive end performs mathematical operation processing on the load level carried in the header of the received data packet, and encapsulates a load level obtained after the operation processing into the header of the ACK packet. In this case, the load level carried in the header of the ACK packet includes one load level TLV.

The foregoing mainly describes the solutions provided in the embodiments of the present invention from the perspective of interaction between the network elements and processing of the network elements. It can be understood that, in order to implement the foregoing functions, the network elements include a corresponding hardware structure and/or software module for performing the functions. A person skilled in the art should readily appreciate that this application can be implemented in a form of hardware or in a form of a combination of hardware and computer software with reference to the embodiments disclosed in the specification. Whether a function is performed by hardware or by computer software driving hardware depends on specific applications and design constraints of the technical solutions. A person skilled in the art can use different methods to implement the described function for each particular application, but such implementation shall not be considered to be beyond the scope of this application.

This application further provides an apparatus embodiment for implementing the steps and methods of the foregoing method embodiments. It should be noted that the apparatus embodiment may be used in combination with the foregoing method, or may be used alone.

FIG. 9 is a schematic structural diagram of a TCP transmit end according to an embodiment of the present invention. As shown in FIG. 9, the TCP transmit end includes a processor 901, a memory 902, and a communications interface 903. The processor 901 is connected to the memory 902 and the communications interface 903. For example, the processor 901 may be connected to the memory 902 and the communications interface 903 by using a bus.

The processor 901 is configured to support the TCP transmit end in performing the corresponding functions in the foregoing method. The processor 901 may be a central processing unit (English: central processing unit, CPU), a network processor (English: network processor, NP), a hardware chip, or any combination thereof. The foregoing hardware chip may be an application-specific integrated circuit (English: application-specific integrated circuit, ASIC), a programmable logic device (English: programmable logic device, PLD), or a combination thereof. The foregoing PLD may be a complex programmable logic device (English: complex programmable logic device, CPLD), a field-programmable gate array (English: field-programmable gate array, FPGA), generic array logic (English: generic array logic, GAL), or any combination thereof.

The memory 902 is configured to store a data packet that needs to be sent by the TCP transmit end, an ACK packet that is returned by a TCP receive end, and the like. The memory 902 may include a volatile memory (English: volatile memory), for example, a random access memory (English: random-access memory, RAM for short). The memory 902 may also include a non-volatile memory (English: non-volatile memory), for example, a read-only memory (English: read-only memory, ROM for short), a flash memory (English: flash memory), a hard disk drive (English: hard disk drive, HDD for short), or a solid state drive (English: solid-state drive, SSD for short). The memory 902 may also include a combination of the foregoing types of memories.

The communications interface 903 is configured to connect to a network node or the TCP receive end, and send/receive a message related in the foregoing method to/from the network node or the TCP receive end.

The processor 901 may perform the following operations:

sending a source data packet by using the communications interface 903, and receiving the ACK packet returned by the TCP receive end, where a header of the ACK packet carries a load level; and determining a TCP congestion window based on the load level. For specific implementations, refer to the description of the embodiment shown in FIG. 7.

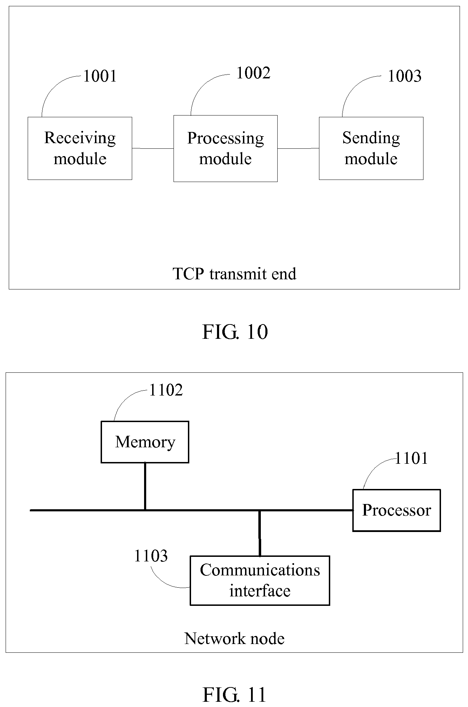

FIG. 10 is a schematic structural diagram of another TCP transmit end according to an embodiment of the present invention. As shown in FIG. 10, the TCP transmit end includes a receiving module 1001, a processing module 1002, and a sending module 1003.

The receiving module 1001 is configured to receive an ACK packet, where a header of the ACK packet carries a load level.

The processing module 1002 is configured to adjust a TCP send window based on the load level that is carried in the header of the received ACK packet. For specific implementations, refer to the description of the embodiment shown in FIG. 7.

The sending module 1003 is configured to send a source data packet.

FIG. 11 is a schematic structural diagram of a network node according to an embodiment of the present invention. As shown in FIG. 11, the network node includes a processor 1101, a memory 1102, and a communications interface 1103. The processor 1101 is connected to the memory 1102 and the communications interface 1103. For example, the processor 1101 may be connected to the memory 1102 and the communications interface 1003 by using a bus.

The processor 1101 is configured to support the network node in performing the corresponding functions in the foregoing method. The processor 1101 may be a central processing unit (English: central processing unit, CPU), a network processor (English: network processor, NP), a hardware chip, or any combination thereof. The foregoing hardware chip may be an application-specific integrated circuit (English: application-specific integrated circuit, ASIC), a programmable logic device (English: programmable logic device, PLD), or a combination thereof. The foregoing PLD may be a complex programmable logic device (English: complex programmable logic device, CPLD), a field-programmable gate array (English: field-programmable gate array, FPGA), generic array logic (English: generic array logic, GAL), or any combination thereof.

The memory 1102 is configured to store a data packet received by the network node. The memory 1102 may include a volatile memory (English: volatile memory), for example, a random access memory (English: random-access memory, RAM for short). The memory 1102 may also include a non-volatile memory (English: non-volatile memory), for example, a read-only memory (English: read-only memory, ROM for short), a flash memory (English: flash memory), a hard disk drive (English: hard disk drive, HDD for short), or a solid state drive (English: solid-state drive, SSD for short). The memory 1102 may also include a combination of the foregoing types of memories.

The communications interface 1103 is configured to connect to a TCP transmit end, another network node, or a TCP receive end, and send/receive a message related in the foregoing method to/from the TCP transmit end, the another network node, or the TCP receive end.

The processor 1101 may perform the following operations:

receiving a data packet of the TCP transmit end or the another network node by using the communications interface 1103, and sending the data packet to the another network node or the TCP receive end. For specific implementations, refer to the description of the embodiments shown in FIG. 4 to FIG. 6.

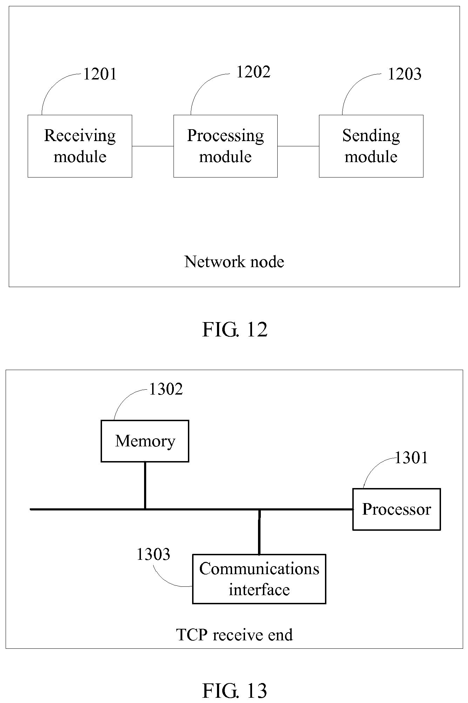

FIG. 12 is a schematic structural diagram of another network node according to an embodiment of the present invention. As shown in FIG. 12, the network node includes a receiving module 1201, a processing module 1202, and a sending module 1203.

The receiving module 1201 is configured to receive a data packet sent by a TCP transmit end or another network node.

The processing module 1202 is configured to: process the data packet based on the received data packet and a congestion level of a first output port, to generate a data packet to be sent by the network node. For specific implementations, refer to the description of the embodiments shown in FIG. 4 to FIG. 6.

The sending module 1203 is configured to send a data packet obtained after processing by the network node.

FIG. 13 is a schematic structural diagram of a TCP receive end according to an embodiment of the present invention. As shown in FIG. 13, the TCP receive end includes a processor 1301, a memory 1302, and a communications interface 1303. The processor 1301 is connected to the memory 1302 and the communications interface 1303. For example, the processor 1301 may be connected to the memory 1302 and the communications interface 1303 by using a bus.

The processor 1301 is configured to support the TCP receive end in performing the corresponding functions in the foregoing method. The processor 1301 may be a central processing unit (English: central processing unit, CPU), a network processor (English: network processor, NP), a hardware chip, or any combination thereof. The foregoing hardware chip may be an application-specific integrated circuit (English: application-specific integrated circuit, ASIC), a programmable logic device (English: programmable logic device, PLD), or a combination thereof. The foregoing PLD may be a complex programmable logic device (English: complex programmable logic device, CPLD), a field-programmable gate array (English: field-programmable gate array, FPGA), generic array logic (English: generic array logic, GAL), or any combination thereof.

The memory 1302 is configured to store a data packet, and the like, received by the TCP receive end. The memory 1302 may include a volatile memory (English: volatile memory), for example, a random access memory (English: random-access memory, RAM for short). The memory 1302 may also include a non-volatile memory (English: non-volatile memory), for example, a read-only memory (English: read-only memory, ROM for short), a flash memory (English: flash memory), a hard disk drive (English: hard disk drive, HDD for short), or a solid state drive (English: solid-state drive, SSD for short). The memory 1302 may also include a combination of the foregoing types of memories.

The communications interface 1303 is configured to connect to a network node or a TCP transmit end, and send/receive a message related in the foregoing method to/from the network node or the TCP transmit end.

The processor 1301 may perform the following operations:

receiving a data packet by using the communications interface 1303, where a header of the data packet carries a load level; and determining a load level in a header of an ACK packet based on the load level. For a specific implementation, refer to the description of the embodiment shown in FIG. 8.

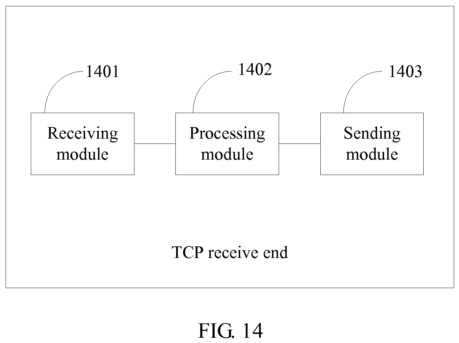

FIG. 14 is a schematic structural diagram of another TCP receive end according to an embodiment of the present invention. As shown in FIG. 14, the TCP receive end includes a receiving module 1401, a processing module 1402, and a sending module 1403.

The receiving module 1401 is configured to receive a data packet, where a header of the data packet carries a load level.

The processing module 1402 is configured to generate a load level in a header of an ACK packet based on the load level that is carried in the header of the received data packet. For a specific implementation, refer to the description of the embodiment shown in FIG. 8.

The sending module 1403 is configured to send the ACK packet.

A person of ordinary skill in the art may understand that all or some procedures of the methods in the foregoing embodiments may be implemented by a computer program instructing related hardware. The program may be stored in a computer readable storage medium. When the program is run, the procedures of the foregoing method embodiments may be included. The storage medium may be a magnetic disk, an optical disc, a read-only memory (Read-Only Memory, ROM), a random access memory (Random Access Memory, RAM), or the like.

The disclosed above are merely exemplary embodiments of the present invention, but certainly are not intended to limit the rights scope of the present invention. Any equivalent modifications made according to the claims of the present invention shall still fall within the scope of the present invention.

The embodiments of the present invention provide a method for determining a TCP congestion window. A network node receives a data packet sent by a TCP transmit end to obtain a load level of a first output port, compares the load level of the first output port with a load level carried in a header of the data packet to update a load level in the header of the data packet, and sends the data packet to a TCP receive end. The TCP receive end adds the load level in the data packet to a header of a returned ACK packet, and the TCP receive end determines a size of a congestion window based on a load level in the header of the received ACK packet. It can be learned that in a process of determining a TCP congestion window, a load level of each network node on a path through which the data packet is sent is considered. Therefore, a size of a congestion window can be determined more properly and accurately. In a low-load or high-load phase of a network, the method in the present invention is mainly intended to fast increase or decrease a size of the congestion window to an ideal size, so that the network converges to high utilization, and bandwidth utilization and network throughput are improved. In addition, fairness of data stream connections is improved.

In the several embodiments provided in this application, it should be understood that the disclosed system, apparatus, and method may be implemented in other manners. For example, the foregoing described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented electrically, mechanically, or in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When functions are implemented in a form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for determining a TCP congestion window, comprising:

   Receiving, by a network node, a data packet, wherein a header of the data packet carries a load level of a path through which the data packet passes;
   obtaining, by the network node, a load level of a corresponding first output port used to send the data packet;
   updating, by the network node, the load level in the data packet based on the load level of the first output port; and
   sending, by the network node, the updated data packet.

2. The method according to claim 1, wherein the updating, by the network node, the load level in the data packet comprises:

   adding, by the network node to the header of the data packet, the load level of the corresponding first output port used to send the data packet.

3. The method according to claim 1, wherein the updating, by the network node, the load level in the data packet comprises:

   determining, by the network node, that the load level of the corresponding first output port used to send the data packet is higher than a load level in the header of the data packet; and
   replacing, by the network node, the load level in the header of the data packet with the load level of the corresponding first output port used to send the data packet.

4. The method according to any one of claims 1 to 3, wherein the load level may be represented by an idleness rate or a congestion level.

**5.** The method according to claim 1, wherein the data packet is an IP data packet.

**6.** A method for determining a TCP congestion window, comprising:

Sending, by a TCP transmit end, a source data packet, and waiting to receive an ACK packet;
receiving, by the TCP transmit end, the ACK packet; and
determining, by the TCP transmit end, a TCP congestion window based on a load level carried in a header of the ACK packet.

**7.** The method according to claim 6, wherein the method for determining a TCP congestion window further comprises:

when the load level is less than or equal to 1, New TCP congestion window = Current congestion window * (1 + (1 − Load level)/Load level);

or when the load level is greater than 1, New TCP congestion window = Current congestion window/Load level.

**8.** A method for determining a TCP congestion window, comprising:

Receiving, by a TCP receive end, a data packet;
generating, by the TCP receive end, an ACK packet of the data packet, wherein a header of the ACK packet carries a load level in a header of the data packet; and
sending, by the TCP receive end, the ACK packet.

**9.** A network node, comprising:

a communications interface; and
a processor, configured to: receive a data packet by using the communications interface, and obtain a load level of a corresponding first output port used to send the data packet, wherein a header of the data packet carries a load level of a path through which the data packet passes; update the load level in the data packet based on the load level of the first output port; and send the updated data packet by using the communications interface.

**10.** The network node according to claim 9, wherein that a processor updates the load level in the data packet comprises: the processor adds, to the header of the data packet, the load level of the corresponding first output port used to send the data packet.

**11.** The network node according to claim 9, wherein that a processor updates the load level in the data packet comprises:

the processor determines that the load level of the corresponding first output port used to send the data packet is higher than a load level in the header of the data packet; and
the processor replaces the load level in the header of the data packet with the load level of the corresponding first output port used to send the data packet.

**12.** The network node according to any one of claims 9 to 11, wherein the load level may be represented by an idleness rate or a congestion level of the first output port.

**13.** The network node according to claim 9, wherein the data packet is an IP data packet.

**14.** A TCP transmit end, comprising:

a communications interface; and
a processor, configured to: send a source data packet and receive an ACK packet by using the communications interface; and determine a TCP congestion window based on a load level carried in a header of the ACK packet.

15. The TCP transmit end according to claim 14, wherein that a processor determines a TCP congestion window further comprises:

when the load level is less than or equal to 1, New TCP congestion window = Current congestion window * (1 + (1 – Load level)/Load level);

or when the load level is greater than 1, New TCP congestion window = Current congestion window/Load level.

16. A TCP receive end, comprising:

a communications interface; and
a processor, configured to: receive a data packet by using the communications interface; generate an ACK packet of the data packet, wherein a header of the ACK packet carries a load level in a header of the data packet; and send the ACK packet by using the communications interface.

| TCP transmit end | Network node | Network node | TCP receive end |

FIG. 1

| TCP transmit end | First network node | Second network node | TCP receive end |
|---|---|---|---|

201. Send a source data packet

202. Obtain a load level of a first output port, and add the load level to a header of the source data packet

203. Send a first-network-node data packet (a header of the packet carries a load level)

204. Obtain a load level of a second output port; and when the load level of the second output port is higher than the load level in the header of the data packet, update network load in the header of the data packet; otherwise, skip changing the load level in the header of the data packet

205. Send a second-network-node data packet (a header of the packet carries a load level)

206. Obtain a load level in the header of the data packet, and encapsulate the load level into a header of an ACK packet

207. Return the ACK packet (the header of the packet carries a load level)

208. Determine a new congestion window value based on the load level and a current congestion window value

FIG. 2

| TCP transmit end | First network node | Second network node | TCP receive end |
|---|---|---|---|

301. Send a source data packet

302. Obtain a load level of a first output port, and add the load level to a header of the source data packet

303. Send a first-network-node data packet (a header of the packet carries a load level)

304. Obtain a load level of a second output port, and add the load level to a header of the data packet

305. Send a second-network-node data packet (a header of the packet carries a load level)

306. Obtain a load level in the header of the data packet, and encapsulate the load level into a header of an ACK packet

307. Return the ACK packet (the header of the packet carries a load level)

308. Determine a new congestion window value based on the load level and a current congestion window value

FIG. 3

Start

401. Receive a data packet, where a header of the data packet carries a load level of a path through which the data packet passes

402. Obtain a load level of a corresponding first output port used to send the data packet

403. Update the load level in the data packet based on the load level of the first output port

404. Send the updated data packet

End

FIG. 4

```
                        ┌──────────────┐
                        │    Start     │
                        └──────┬───────┘
                               │
                               ▼
              ┌────────────────────────────────────┐
              │    501. Receive a data packet       │
              └────────────────┬───────────────────┘
                               │
                               ▼
              ┌────────────────────────────────────┐
              │ 502. Obtain a load level of a       │
              │        first output port            │
              └────────────────┬───────────────────┘
                               │
                               ▼
                        503. Determine
                whether the load level of the first
       No       output port is higher than a load level
                       in a header of the data
                              packet
                               │ Yes
                               ▼
              ┌────────────────────────────────────┐
              │ 504. Replace the load level in the  │
              │ header of the data packet with the  │
              │ load level of the first output port │
              └────────────────┬───────────────────┘
                               │
                               ▼
              ┌────────────────────────────────────┐
              │ 505. Send a network node data packet│
              └────────────────┬───────────────────┘
                               │
                               ▼
                        ┌──────────────┐
                        │     End      │
                        └──────────────┘
```

FIG. 5

```
         ┌──────────────┐
         │    Start     │
         └──────┬───────┘
                ↓
    ┌────────────────────────┐
    │ 601. Receive a data packet │
    └───────────┬────────────┘
                ↓
    ┌────────────────────────┐
    │ 602. Obtain a load level of a first
    │        output port      │
    └───────────┬────────────┘
                ↓
    ┌────────────────────────┐
    │ 603. Add the load level of the first
    │ output port to a header of the data
    │          packet          │
    └───────────┬────────────┘
                ↓
    ┌────────────────────────┐
    │ 604. Send a network node data
    │           packet         │
    └───────────┬────────────┘
                ↓
         ┌──────────────┐
         │     End      │
         └──────────────┘
```

**FIG. 6**

```
         ┌──────────────┐
         │    Start     │
         └──────┬───────┘
                ↓
    ┌────────────────────────┐
    │ 701. Send a source data packet, and
    │    wait to receive an ACK packet │
    └───────────┬────────────┘
                ↓
    ┌────────────────────────┐
    │ 702. Receive the ACK packet │
    └───────────┬────────────┘
                ↓
    ┌────────────────────────┐
    │ 703. Determine a TCP congestion
    │ window based on a load level carried
    │  in a header of the ACK packet │
    └───────────┬────────────┘
                ↓
         ┌──────────────┐
         │     End      │
         └──────────────┘
```

**FIG. 7**

```
                        ┌─────────────┐
                        │    Start    │
                        └─────────────┘
                               │
                               ▼
        ┌──────────────────────────────────────────────┐
        │         801. Receive a data packet            │
        └──────────────────────────────────────────────┘
                               │
                               ▼
        ┌──────────────────────────────────────────────┐
        │  802. Generate an ACK packet of the           │
        │  data packet, where a header of the           │
        │  ACK packet carries a load level in a         │
        │  header of the data packet                    │
        └──────────────────────────────────────────────┘
                               │
                               ▼
        ┌──────────────────────────────────────────────┐
        │         803. Send the ACK packet              │
        └──────────────────────────────────────────────┘
                               │
                               ▼
                        ┌─────────────┐
                        │     End     │
                        └─────────────┘
```

FIG. 8

FIG. 9

1001

1002

1003

Receiving
module

Processing
module

Sending
module

TCP transmit end

FIG. 10

1102

Memory

1101

Processor

1103

Communications
interface

Network node

FIG. 11

1201                1202               1203

| Receiving module | Processing module | Sending module |

Network node

**FIG. 12**

1302

Memory

1301

Processor

1303

Communications interface

TCP receive end

**FIG. 13**

| 1401 | 1402 | 1403 |
|---|---|---|
| Receiving module | Processing module | Sending module |

TCP receive end

FIG. 14

# INTERNATIONAL SEARCH REPORT

| International application No. |
| --- |
| PCT/CN2017/106730 |

## A. CLASSIFICATION OF SUBJECT MATTER

H04L 12/807 (2013.01) i

According to International Patent Classification (IPC) or to both national classification and IPC

## B. FIELDS SEARCHED

Minimum documentation searched (classification system followed by classification symbols)

H04L H04W

Documentation searched other than minimum documentation to the extent that such documents are included in the fields searched

Electronic data base consulted during the international search (name of data base and, where practicable, search terms used)

CPRSABS, CNTXT, CNKI; VEN: 拥塞窗口, 负载, ACK, 头, congestion window, load, acknowledgement, header

## C. DOCUMENTS CONSIDERED TO BE RELEVANT

| Category* | Citation of document, with indication, where appropriate, of the relevant passages | Relevant to claim No. |
| --- | --- | --- |
| X | CN 101056259 A (CENTRAL SOUTH UNIVERSITY), 17 October 2007 (17.10.2007), description, page 3, lines 7-19, and table 1 | 1-16 |
| X | CN 102404208 A (INSTITUTE OF SOFTWARE, CHINESE ACADEMY OF SCIENCES), 04 April 2012 (04.04.2012), abstract, and claim 1 | 1-16 |
| X | US 7352700 B2 (LUCENT TECHNOLOGIES INC.), 01 April 2008 (01.04.2008), description, column 2, line 24 to column 5, line 35 | 1-16 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 December 2017 | 20 December 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>YU, Ruifu<br><br>Telephone No. (86-10) 62089387 |
| --- | --- |

Form PCT/ISA/210 (second sheet) (July 2009)

## INTERNATIONAL SEARCH REPORT
Information on patent family members

International application No.

PCT/CN2017/106730

| Patent Documents referred in the Report | Publication Date | Patent Family | Publication Date |
|---|---|---|---|
| CN 101056259 A | 17 October 2007 | CN 100553230 C | 21 October 2009 |
| CN 102404208 A | 04 April 2012 | CN 102404208 B | 02 July 2014 |
| US 7352700 B2 | 01 April 2008 | US 2005053002 A1 | 10 March 2005 |
| | | US 7944820 B2 | 17 May 2011 |
| | | US 2008144509 A1 | 19 June 2008 |

Form PCT/ISA/210 (patent family annex) (July 2009)